Europäisches Patentamt

European Patent Office

Office européen des brevets

(11) Publication number: **0 454 934 A1**

# EUROPEAN PATENT APPLICATION

(21) Application number: **90830490.0**

(51) Int. Cl.⁵: **B60Q 1/22**

(22) Date of filing: **30.10.90**

(30) Priority: **03.05.90 IT 2109790 U**

(43) Date of publication of application:
**06.11.91 Bulletin 91/45**

(84) Designated Contracting States:
**AT BE DE ES FR GB NL SE**

(71) Applicant: **LIRANOVA CAPITAL S.r.l.**
**Via Turati, 25**
**I-20121 Milano(IT)**

(72) Inventor: **Leuci, Gilberto**
**c/o LIRANOVA CAPITAL S.r.l., Via Turati, 25**
**I-20121 Milano(IT)**

(74) Representative: **Cicogna, Franco**
**Ufficio Internazionale Brevetti Dott.Prof.**
**Franco Cicogna Via Visconti di Modrone,**
**14/A**
**I-20122 Milano(IT)**

(54) **Light and acoustical device for application on the rear of a motor vehicle to signal a reverse motion thereof.**

(57) There is disclosed a light and acoustical device for application on the rear of a motor vehicle to signal a reverse motion thereof, comprising a blinker 2 end an acoustical signaller 3 which are driven, with the motor vehicle engine in a started condition, by the transmission control lever as the latter is in its reverse motion position.

*Fig.1*

EP 0 454 934 A1

## BACKGROUND OF THE INVENTION

The present invention relates to a light and acoustical device for application on the rear of a motor vehicle to signal a reverse motion thereof.

There are already known several types of signalling devices, to be arranged on the rear of a motor vehicle, adapted to signal a direction change, a slowing down or a sudden stop of the motor vehicle.

However, these known devices do not provide all of the possible signalling functions and, in particular, those deriving from a reverse motion driving.

In fact, in such a condition, a person arranged behind a motor vehicle in a stop condition, is not able of opportunely realizing that the motor vehicle is starting a reverse motion operation.

Moreover, frequently the motor vehicle driver has a poor rear visibility since his view field can be reduced both because of physical reasons (for example in the case of trucks, vans and the like) and because of contingent reasons (for example large volume loads susceptible to obstruct the visual field of the driver).

## SUMMARY OF THE INVENTION

Accordingly, the aim of the present invention is to provide a light and acoustical device for application on the rear of the motor vehicle to signal a reverse motion thereof, which overcomes the above mentioned drawbacks.

Within the scope of the above aim, a main object of the present invention is to provide such a signalling device which is specifically adapted to timely signal a reverse motion operation of a motor vehicle to the person arranged behind said motor vehicle.

According to one aspect of the present invention, the above mentioned aim and objects, as well as yet other objects, which will become more apparent hereinafter, are achieved by a light and acoustical device for application on the rear of a motor vehicle to signal a reverse motion thereof, characterized in that said device comprises a blinker and an acoustical signaller which are both operated, with the engine of the motor vehicle being in a started condition, as the transmission control lever is brought to a reverse motion position thereof.

## BRIEF DESCRIPTION OF THE DRAWING

Other features and advantages of the present invention will become more apparent from the following detailed disclosure of a preferred embodiment thereof, which is illustrated, by way of an indicative but not limitative example, in the accompanying drawing, where:

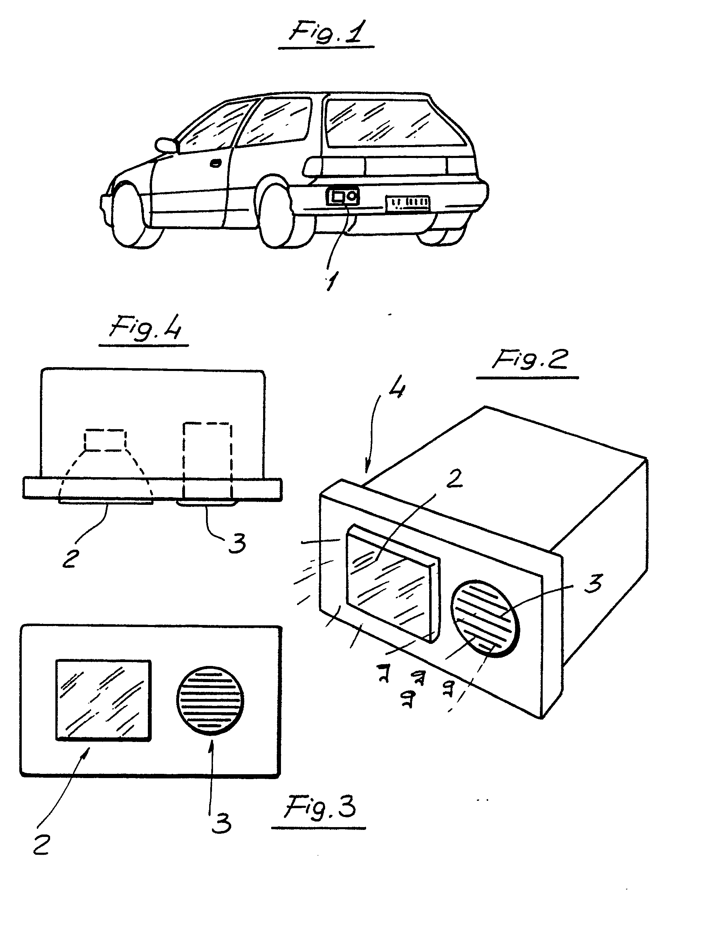

Fig. 1 is an exemplary view of an embodiment of the subject signalling device arranged on the rear of a generic motor vehicle;

Fig. 2 is a perspective view illustrating the light-acoustical signalling device according to the present invention; and

Figs. 3 and 4 are respectively a front view and a top plan view of the signalling device according to the invention.

## DESCRIPTION OF THE PREFERRED EMBODIMENT

With reference to the figures, the signalling device 1 according to the invention comprises a blinker 2, either white or colored, and an acoustical signaller 3, which are preferably enclosed in a single strong casing 4.

According to a main feature of the invention, the mentioned blinker and acoustical signaller are operated through an electric system, not specifically shown since it should be apparent to one skilled in the art, which will be energized as the transmission control lever is operated, and, more specifically, as said control lever is brought to its reverse motion position, with the engine of the motor vehicle in a started condition.

In this connection, it should be apparent that the device can be made of any suitable materials and with any suitable shapes, depending on the motor vehicles thereon the device must be applied.

From the above disclosure and the accompanying drawing, it should be apparent that the invention fully achieves the intended aim and objects.

While the invention has been disclosed and illustrated with reference to a preferred embodiment thereof, it should be apparent that the disclosed embodiment is susceptible to several modifications and variations all of which will come within the spirit and scope of the appended claims.

## Claims

1. A light and acoustical device for application on the rear of a motor vehicle to signal a reverse motion thereof, characterized in that said device comprises a blinker and an acoustical signaller which are both operated, with the engine of the motor vehicle being in a started condition, as the transmission control lever is brought to a reverse motion position thereof.

2. A signalling device according to Claim 1, characterized in that said blinker, either white or colored, and said acoustical signaller are enclosed within a single casing.

3. A signalling device according to Claims 1 and 2, characterized in that said device is operated by an electric system which is energized as the transmission control lever of the motor vehicle is brought, with the motor vehicle engine being in a started condition, to a reverse motion position thereof.

Fig.1

Fig.4

Fig.2

Fig.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-1 111 844 (PRISK DEVELOPMENTS LTD) <br> * page 3, lines 103 - 111 * | 1,3 | B 60 Q 1/22 |
| X | US-A-3 818 438 (STACHA) <br> * column 3, line 35 - column 4, line 33; figure 3 * | 1,3 | |
| X | US-A-3 487 357 (PORTER) <br> * the whole document * | 1,3 | |
| A | FR-A-2 635 304 (DESVIGNES) <br> * abstract; figures 1-10 * | 1-3 | |

TECHNICAL FIELDS SEARCHED (Int. Cl.5)

B 60 Q

The present search report has been drawn up for all claims

| Place of search | Date of completion of search | Examiner |
|---|---|---|
| The Hague | 06 June 91 | ONILLON C.G.A. |

CATEGORY OF CITED DOCUMENTS

X : particularly relevant if taken alone
Y : particularly relevant if combined with another
    document of the same catagory
A : technological background
O : non-written disclosure
P : intermediate document
T : theory or principle underlying the invention

E : earlier patent document, but published on, or after
    the filing date
D : document cited in the application
L : document cited for other reasons

& : member of the same patent family, corresponding
    document